# EUROPEAN PATENT SPECIFICATION

(11) **EP 3 079 403 B1**
(45) Date of publication and mention of the grant of the patent: **17.05.2017**
(21) Application number: 15305513.2
(22) Date of filing: 07.04.2015
(51) Int. Cl.: H04W 36/28, H04W 36/08, H04W 84/00

(54) **HANDLING A HANDOVER OF A WIRELESS COMMUNICATION SYSTEM LOCATED ON-BOARD A MOVING VEHICLE**
HANDHABUNG EINES HANDOVER EINES DRAHTLOSEN KOMMUNIKATIONSSYSTEMS, DAS SICH AN BORD EINES SICH BEWEGENDEN FAHRZEUGS BEFINDET
GESTION D'UN TRANSFERT D'UN SYSTÈME DE COMMUNICATION SANS FIL SITUÉ A BORD D'UN VEHICULE EN MOUVEMENT

(43) Date of publication of application: 12.10.2016
(73) Proprietor: Mitsubishi Electric R&D Centre Europe B.V., 1119 NS Schiphol Rijk Amsterdam (NL); Mitsubishi Electric Corporation, Chiyoda-ku Tokyo 100-8310 (JP)
(72) Inventor: Khanfouci, MOURAD, 35708 RENNES Cedex 7 (FR); Brunel, Loïc, 35708 Rennes cedex 7 (FR); Bonneville, Hervé, 35708 RENNES cedex 7 (FR)
(74) Representative: Cabinet Plasseraud

(56) References cited:
- EP-A1- 1 401 229
- WO-A1-2015/009075

## Description

The invention relates to the handover of communication systems located onboard a moving vehicle between base stations of a wireless communication infrastructure with which such systems are in communication.

The handling of the handovers of such systems is an important problem for the development of onboard communication systems, in particular when the moving vehicle on which they are located is capable of achieving high velocities.

The current handover designs generally aim at defining handover thresholds based on which the handovers are triggered and which minimize the degradation of the quality of service of the users of the communication systems and/or minimize the risk of failure of the handovers.

State-of-the-art handover policies intend to solve these problems within the "break before make" general handover framework within which a handover is initialized with an interruption of the connection between the considered system and the current source base station through which the system is connected to the infrastructure. A new connection is then established with the target base station and packets of the source base station are forwarded to the target base station in order to minimize the packet loss.

Further considerations apply to communication systems onboard vehicles, and in particular onboard trains. In fact, trains are based on a Communication-Based Train Control, known as CBTC, in the context of which a CBTC system located onboard the train generates safety-related information about the train which are transferred to a ground control station using the communication system of the train which is itself connected to the control station through a wireless communication system.

In a CBTC environment, the communications of the communication system onboard the train are divided into critical communications, which correspond to the communications for the exchange of the data generated by the CBTC system and include for instance information regarding the state of the train such as its speed, its position, surveillance data, etc., and non-critical communications, which correspond for instance to passenger-related data such as communications, multimedia data and so on.

A known method for handling a handover of a communication system located onboard a train and having two separate antennas consists in attempting a first handover using the first antenna once the train reaches a coverage area which is common to both the current base station through which the train is connected to the wireless communication infrastructure and the target base station. If the handover fails for the first antenna, a handover using the second antenna is then attempted.

In both attempts, the handover procedure is applied to a communication bearer which is common to the critical and non-critical communications that is initially set up with the source base station. In case the two attempts fail, both the critical and the non-critical communications between the communication system and the infrastructure are interrupted, which may result in an emergency stop of the train due to the critical communications between the control station and the train being halted.

European patent application EP 1 401 229 A1 discloses wireless communication in a scenario in which a moving vehicle (e.g. a train) travels along a path and is served by different base stations. In particular, the moving vehicle has an on-board radio unit (OBRU) being in communication with a controller in a radio base controller (RBC) via a source base station through a first antenna and with a target base station through a second antenna. The OBRU delivers information regarding active MS connections in the moving vehicle and vehicle information such as speed, direction and position to the target base station either directly or via the RBC controller so that the target base station may prepare resources proactively.

An object of the invention is therefore to provide a method for handling a handover which minimizes the communication interruption for the critical signaling of a communication system located onboard a moving vehicle.

To that end, the invention relates to a method for handling a handover of a wireless communication system located onboard a moving vehicle between a source base station and a target base station of a wireless communication infrastructure, wherein:
- initially, the wireless communication system and the source base station are connected using at least one first common communication bearer with which both critical communications and non-critical communications are exchanged between the wireless communication system and the source base station,
- during a splitting step, a dual connectivity configuration is enabled, in which the critical communications and the non-critical communications are split between at least one critical communication bearer configured to bear the critical communications and at least one non-critical communication bearer configured to bear the non-critical communications, the critical and non-critical communication bearers being connected to the source base station,
- during a handover step, a handover of the non-critical communication bearer between the source base station and the target base station is carried out,
- a release step performed after the handover step, in which the dual connectivity configuration is disabled, whereby the non-critical and critical communication bearers are regrouped into at least one second common bearer through which the target base station and the wireless communication system exchange both the critical and non-critical communications.

Due to the handover being first carried out solely for the non-critical communications while the critical communications are kept in place between the source base station and the communication system, the method according to the invention prevents interruptions of critical communications. This translates into a reduced risk of causing unwanted situations for the communication system and the vehicle itself, such as an emergency stop when the vehicle is a train having a CBTC system whose communications with the ground station are thus stopped.

According to another feature of the invention, during the splitting step, a cell range extension of the source base station is performed using an inter-cell interference coordination between the source base station and the target base station so as to increase a cell range of the source base station for the critical communication bearer.

According to another feature of the invention, during the handover step, the target base station uses time-frequency resources that are different from time-frequency resources used by the source base station to maintain connectivity with the critical communication bearer.

According to another feature of the invention, during the handover step, the target base station uses time-frequency resources with low power, said time-frequency resources including time-frequency resources used by the source base station to maintain connectivity with the critical communication bearer.

According to another feature of the invention, the source base station determines at least an amount of time-frequency resources needed by said source base station to maintain connectivity with the critical communication bearer during the cell range extension of the source base station and reports at least said amount to the target base station.

According to another feature of the invention, the amount of resources is determined as a function of the speed of the vehicle.

According to another feature of the invention, the splitting step is triggered after a handover attempt for handing over the wireless communication system between the source base station and the target base station has failed and at least one request for a handover using the dual connectivity configuration has been sent to the source base station and/or to a core network of the wireless communication infrastructure.

According to another feature of the invention, the at least one request is sent by the communication system to the source base station.

According to another feature of the invention, the at least one request comprises a request for a handover using the dual connectivity configuration sent by the target base station to the source base station and a request for triggering the splitting step sent by the target base station to the core network.

According to another feature of the invention, the at least one request is a request for triggering the splitting step sent by the target base station to the source base station.

According to another feature of the invention, the request for triggering the splitting step is forwarded to the core network which carries out the splitting step in response to said request.

According to another feature of the invention, the source and/or target base station or a core network of the wireless communication infrastructure are configured to determine a handover success rate between the source base station and the target base station, and the splitting step and the handover step are triggered when conditions including a condition regarding the handover success rate being above a predetermined threshold are met.

The invention further relates to a wireless communication infrastructure for use in a method according to any of the preceding claims, said wireless communication infrastructure comprising:
- a source base station adapted to communicate with a wireless communication system located onboard a moving vehicle using at least one first common communication bearer with which both critical communications and non-critical communications are exchanged between the wireless communication system and the source base station,
- a target base station,
the wireless communication infrastructure comprising one or more components configured to:
- implement a dual connectivity configuration for the communications between the wireless communication infrastructure and said wireless communication system, in which the critical communications and the non-critical communications are split between at least one critical communication bearer configured to bear the critical communications and at least one non-critical communication bearer configured to bear the non-critical communications, said critical and non-critical communication bearers being connected to the source base station,
- carry out a handover of the non-critical communication bearer between the source base station and the target base station, and
- disable the dual connectivity configuration and regroup the non-critical and critical communications bearers into at least one second common communication bearer through which the target base station and the wireless communication system exchange both the critical and non-critical communications.

The invention also relates to a wireless communication system destined to be located on board a moving vehicle and adapted to communicate with a source base station of a wireless communication infrastructure using at least one first common communication bearer with which both critical communications and non-critical communications are exchanged between the wireless communication system and the source base station, said wireless communication system comprising a control module configured to:
- trigger the implementation of a dual connectivity configuration for the communications between the wireless communication infrastructure and said wireless communication system, in which the critical communications and the non-critical communications are split between at least one critical communication bearer configured to bear the critical communications and at least one non-critical communication bearer configured to bear the non-critical communications, said critical and non-critical bearers being connected to the source base station,
- trigger a handover of the non-critical communication bearer between the source base station and a target base station of the wireless communication infrastructure, and
- trigger a disabling of the dual connectivity configuration for the regrouping of the non-critical and critical communication bearers into at least one second common communication bearer through which the target base station and the wireless communication system exchange both the critical and non-critical communications.

The invention further relates to a vehicle comprising a wireless communication system as defined above.

Further features and advantages of the invention will become more apparent by reading the following detailed description of the embodiments, which are given by way of non-limiting examples with reference to the appended drawings, in which:
- Figure 1 is an illustration of a moving vehicle and a wireless communication for use in a method of handling a handover according to the invention; and
- Figure 2 is an illustration of a method of handling a handover according to the invention.

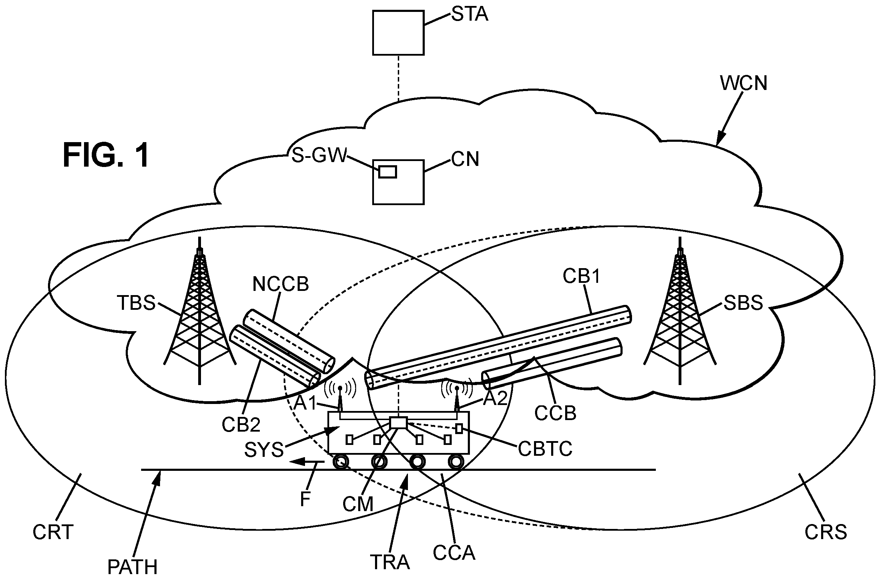

Figure 1 illustrates a moving vehicle TRA which moves in a given direction (illustrated by an arrow F) along a predetermined path PATH. In the example of Figure 1, the moving vehicle is a train and the path PATH is defined by a railroad. The description will therefore be given in a non-limiting manner for a configuration in which the moving vehicle TRA is a train.

The train TRA comprises a wireless communication system SYS, hereafter system SYS, and a CBTC system CBTC in communication with a ground control station STA. The CBTC system is adapted to be connected to the ground control station STA through the system SYS. The system SYS is adapted to be connected to the ground control station STA through a wireless communication infrastructure WCN, hereafter infrastructure WCN.

The CBTC system CBTC is configured to generate operational data related to the operation of train. The CBTC system is connected to the system SYS on-board the train. The operational data are destined to the station STA for the surveillance of the train. These data include the position of the train, the speed of the train, surveillance data of pieces of equipment of the train, and so on. For a CBTC-based train, an interruption of the communications between the CBTC system and the control station STA may cause an emergency stop of the train TRA. As such, the communications of the system SYS through which these data are exchanged with the infrastructure WCN constitute critical communications for the system SYS, as described below in more details.

The system SYS comprises a control module CM, two antennas A1, A2 for emitting and receiving communications to and from the infrastructure WCN, and relays located inside the train TRA.

The system SYS is configured to exchange at least two types of communications with the infrastructure WCN: critical communications and non-critical communications.

The critical communications correspond to communications through which operational data generated by the CBTC system are conveyed to the control station STA.

The non-critical communications are destined to devices other than the control station STA. For instance, these communications correspond to passenger-oriented communications. As an example, these communications include data exchanged over the infrastructure WCN regarding personal communications of the passengers, video on demand (VOD) services in the train or onboard internet services. For instance, the non-critical communications originate and/or are destined to personal devices belonging to the passengers, such as portable computers including cellphones, laptop computers and the like, these personal devices being connected to the system SYS using the relays located inside the train TRA.

The critical and non-critical communications of the system SYS may be carried out using a common configuration, in which the critical and non-critical communications are conveyed between the infrastructure WCN and the system SYS using at least one common communication bearer which bears both critical and non-critical communications. The critical and non-critical communications may also be carried out using a dual connectivity configuration in which the critical communications are conveyed using one or more critical communication bearer which only bears the critical communications, and in which the non-critical communications are conveyed using at least one non-critical communication bearer which only bears the non-critical communications.

A communication bearer is defined as a transmission path from a core network (described here below) of the communication infrastructure to the communication system SYS located onboard the moving vehicle. This transmission path is of defined quality, capacity, and delay. This transmission path is defined by two endpoint identifiers and may be either service dependent or a common transmission path for different services.

The dual connectivity configuration is for instance the dual connectivity configuration described in the release 12 of the LTE (Long Term Evolution) standard developed by the 3GPP (3^{rd} Generation Partnership Project).

The infrastructure WCN corresponds to a wireless communication network. The infrastructure WCN comprises a core network CN, a source base station SBS and a target base station TBS.

The infrastructure WCN may be a LTE-based infrastructure. The core network CN may consist of an Evolved Packet Core (EPC) as defined by the LTE standard. In addition, the bases stations may then both be eNodeBs (for "Evolved Node B").

The core network CN comprises a central node forming a serving gateway S-GW for the system SYS.

As for the base stations SBS and TBS, the terms "source" and "target" refer to the fact that during the method of handling a handover according to the invention, the system SYS is initially connected to the infrastructure WCN through the source base station SBS, and that the purpose of the method is to have the system SYS connected to the infrastructure WCN through the target base station TBS, such a transfer between the two base stations being known as a "handover".

The source base station SBS and the target base station TBS are adapted to communicate with each other, for instance via an X2-connection (not shown), as well as with the core network CN. Both stations have a cell range CRS, CRT respectively, which corresponds to a coverage area of the corresponding base station. The cell ranges CRS, CRT share a common coverage area CCA through which the path PATH runs and in which the method according to the invention is carried out when the train TRA reaches with this common coverage area, as will be described in more details below.

In a known manner, the cell range of the base station (or of any base station) may be extended, for instance using an Inter-Cell Interference Coordination (ICIC) method, in which the operations of the source and target base stations SBS, TBS are coordinated so that an extension of the cell range of the SBS may be obtained for the communications with systems such as the system SYS which are connected to the infrastructure WCN via the source base station SBS.

The communications between the system SYS and the base stations SBS, TBS are carried out using time-frequency resources of the base stations. These time-frequency resources correspond to physical resource blocks of an orthogonal frequency division multiplexing system (OFDM) or of an orthogonal division multiple access system (OFDMA). In effect, they correspond to spectral bands of the frequencies over which the base stations are capable to communicate for a given time slot.

In other words, each time-frequency resource corresponds to a period of time or time slot, and for that period of time, a range of frequencies which may be allocated to the communications between the considered base station and a communication system such as the system SYS.

As an example, one time-frequency resource corresponds to a 15 KHz-wide frequency band over a 0,5 millisecond time slot.

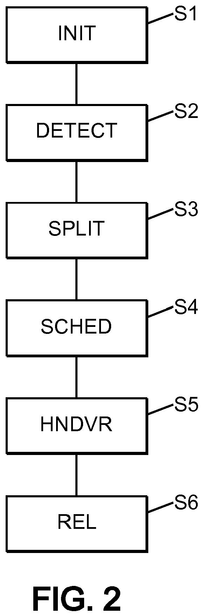

A method according to the invention will now be described in reference to Figures 1 and 2.

The method according to the invention relies on performing a handover of the system SYS between the source base station SBS and the target base station TBS while using the dual connectivity configuration.

Initially, during a step S1, the train TRA reaches the common coverage area CCA. The system SYS is connected to the infrastructure WCN and exchanges both critical and non-critical communications using the common configuration, i.e. over a first common bearer CB1 through which the critical communications (illustrated by a solid line) and the non-critical communications (illustrated by a dotted line) are carried. For instance, the first antenna A1 is then used for the communications between the system SYS and the infrastructure WCN, and the second antenna A2 is idle.

During a detection step S2, one or more conditions for triggering a handover of the system SYS between the source base station SBS and the target base station TBS using the dual connectivity configuration are detected.

One or more conditions may be employed.

In a first embodiment, in detection step S2, the condition detected is the reception by the source base station SBS of a request issued by the system SYS to trigger the handover using the dual connectivity configuration.

In a second embodiment, in detection step S2, the detected condition is also the reception of at least one request to trigger the handover. The request may be sent by the target base station TBS to the source base station SBS and/or to the core network CN of the infrastructure. In this embodiment, the request is sent in response to the failure of a handover attempt intended to handover the system SYS to the target base station TBS.

The at least one request may comprise:
- a request to the source base station SBS to enable the dual connectivity configuration,
- a request to the core network CN to enable the dual connectivity configuration and a request to the source base station SBS to trigger a handover using the dual connectivity configuration, and/or
- a request to the source base station SBS to enable the dual connectivity configuration, the request being forwarded to the core network CN.

In a third embodiment, in detection step S2, the detected condition is the value of a handover success probability being lower than a predetermined threshold. The handover success probability quantifies the probability that a handover of the system SYS between the source base station SBS and the target base station TBS using the common configuration will succeed. The handover success rate is for instance determined by the target base station TBS and/or the core network CN of the infrastructure WCN. This probability may be determined in any known manner. For example, this handover success probability may be estimated from the measurements obtained from the system SYS and knowing the deployment and channel models along the path PATH of the train.

In a fourth embodiment, in detection step S2, the detected conditions comprise the value of one or more handover statistics indicators with regards to predetermined thresholds. For instance, the handover statistics indicators comprise an indicator quantifying the handover completion ratio and indicator quantifying the handover establishment delays, i.e. the durations of the handovers, for all or part of the predetermined path PATH. For instance, these indicators are associated with the portion of the path which runs through the common coverage area CCA. Alternatively, any portion of the predetermined path, including portions outside this common coverage area CCA, may be targeted by the indicators.

In this embodiment, the conditions are met when the considered indicators are below (or above depending on the construction of the indicators) the corresponding predetermined thresholds.

In a fifth embodiment, the condition looked at for detection step S2 is a positional condition related to the train TRA and regarding the fact that the train TRA has entered the common coverage area CCA.

It should be noted that these embodiments may be combined together. In other words, in further embodiments, the condition(s) looked at during step S2 may include the combined condition(s) of more than one of the embodiments above. For instance, the positional condition of the fifth embodiment may also be used in the preceding embodiments.

During a splitting step S3 which occurs when the condition(s) is met during the detection step S2, the dual connectivity configuration is enabled. In other words, the first common bearer CB1 is split into at least one non-critical communication bearer NCCB (Figure 1) and at least one critical communication bearer CCB (Figure 1) which maintain the connection of the system SYS to the source base station SBS. After the dual connectivity configuration has been enabled, the critical and non-critical communications are maintained between the source base station SBS and the system SYS through the critical and non-critical communication bearers NCCB, CCB respectively.

During a scheduling step S4, the source base station SBS determines and sends to the target base station TBS information regarding the time-frequency resources that will be used by the source base station SBS to maintain its connectivity with the critical communication bearer(s) CCB while a handover of the non-critical communication bearer(s) NCCB is performed at a next step described below, and during which an inter-cell interference coordination is carried out between the base stations SBS, TBS to extend the cell range CRS of the source base station SBS to maintain connectivity of the critical bearer CCB with the source base station SBS.

In a first embodiment, in step S4, the resources needed for the connectivity of the source station SBS with the critical communication bearer(s) CCB are known by both the source base station SBS and the target base station TBS and are then reserved. In this case, the source base station SBS signals its handover mode through a binary indicator whose value is 1 if the handover relies on the dual connectivity configuration, and 0 for a common configuration handover.

In a second embodiment, the resources are not known by the target base station TBS. The source base station SBS then determines the amount of resources needed to maintain connectivity with the critical communication bearer CCB at the maximum cell range extension for the source base station SBS.

This determination is:
- based on a message from the target base station TBS sent to the source base station SBS which contains resources reserved by the target base station TBS for the handover; or
- carried out at the source base station SBS and is transmitted to the target base station TBS which reserves resources for the handover as a function of the resources determined by the source base station SBS.

In a third embodiment, the resources are not known at the target base station TBS and the source base station SBS signals both the amount of resources and the specific resources it needs to maintain connectivity with the critical communication bearer CCB at the maximum cell range extension for the source base station SBS.

The determination of the resources needed by the source base station SBS may be based on:
- the load of the physical random access channel (PRACH) of the target base station TBS;
- the current load of the target base station TBS;
- the speed of the train TRA as measured;
- the speed of the train as predicted by a recently received speed profile of the train TRA; and/or
- the cell size of the source base station and/or of the target base station, i.e. the cell range CRS and/or the cell range CRT.

It should be noted that when the speed of the train is used to determine the resources, the determined resources are all the more important when the speed of the train TRA is high, and are lower for a lower speed.

During a handover step S5, a handover of the non-critical communication bearer(s) NCCB to the target base station TBS is carried out while the critical communication bearer(s) CCB is maintained at the source base station SBS.

This handover of the non-critical communication bearer NCCB may be carried out in a known manner, for instance as defined in the LTE standard. For instance, this handover comprises a handover preparation phase, following by a handover execution phase, after which a handover release phase is carried out.

During this step S5, an inter-cell reference coordination ICIC between the two stations TBS, SBS is carried out so that the cell range CRS of the source base station SBS is extended for the critical communication bearer(s) CCB.

During this step, the target base station TBS uses time-frequency resources which are different from the time-frequency resources used by the source base station SBS to maintain connectivity with the critical communication bearer(s) CCB.

Alternatively, the target base station TBS uses all the time-frequency resources available, including time-frequency resources that are used by the source base station SBS to maintain its connectivity with the critical communication bearer(s) CCB. In this case, the target base station TBS uses the resources with a low power.

During a release step S6 which is performed after the handover of step S5 has been completed, the dual connectivity configuration is disabled and the common configuration is enabled. During this step, through the enabling of the common configuration, the non-critical communication bearer(s) NCCB and the critical communication bearer(s) are regrouped into at least one second common communication bearer CB2 through which both critical and non-critical communications are achieved between the target base station TBS and the system SYS.

It should be noted that during step S5, in case the handover of the non-critical communication bearer(s) NCCB has not succeeded, a predetermined number of additional handover attempts using the dual configuration may be carried out. For instance, two additional attempts may be carried out. If these handover attempts also fail, an emergency stop is triggered for the train TRA. This emergency stop is for instance decided at the core network CN of the wireless communication infrastructure WCN.

The steps above may be driven by the core network CN of the infrastructure WCN. In other words, in some embodiments, the core network CN triggers the splitting step, enables the dual connectivity configuration and releases the dual connectivity configuration. In configurations in which the resources of the source base station SBS and the target base station TBS are mutualized, the core network CN of the infrastructure WCN may also carry out the ICIC to extend the cell range of the source base station SBS.

In addition to the conditions of step S2 described above, the triggering of the splitting step S2 may be carried out by the core network CN of the infrastructure as a function of periodical information sent by the base stations about the handover success probability of the infrastructure WCN. Alternatively, this may be carried out as a function of alarms sent by the system SYS regarding its handover performance. Alternatively, it is carried out as a function of indicators regarding the handover performance of the infrastructure determined by the core network for portions of the train path PATH on which the handover performances are below desired performances.

In some other embodiments, the method according to the invention may be driven by the base stations TBS, SBS. In other words, the base stations trigger the splitting step, perform the ICIC and release the dual connectivity configuration when the handover has succeeded or when instructions to that effect are received from the core network.

In these two embodiments, the method according to the invention is therefore driven by components of the infrastructure WCN itself which are configured to carry out or trigger the steps above. These components comprise the base stations SBS, TBS and/or the core network CN.

In other embodiments, the method according to the invention is driven by the system SYS, for instance by its control module CM which is then configured to carry out or trigger at least some of the steps above. For instance, the control module CM of the system SYS is configured to carry out the detection step S2 and to trigger steps S3 to S6.

It should be noted that path PATH may run through the cells of other base stations of the infrastructure WCN besides the target and source base stations TBS, SBS. The method according to the invention may be employed for every handover of the system SYS between two adjacent base stations, or may be employed only for some of them.

For instance, in view of the conditions of step S2, when the condition(s) of this step is not fulfilled for a current common coverage area between two adjacent base stations, the handover of the system SYS between these stations may be carried out using the common configuration.

The embodiments above have been given for a configuration in which the system SYS comprises two antennas A1, A2. In addition, the different bearers CB1, CB2, NCCB, CCB have been depicted as relying on a specific antenna. However, any antenna and any combination of these antennas may be used at any given step of the method above. In addition, the method above may be implemented using a single antenna. As such, in alternative embodiments, the system SYS only comprises a single antenna.

Moreover, the embodiments above have been described for a scenario in which the moving vehicle TRA is a train. However, in alternative embodiments, the moving vehicle may be any vehicle capable of moving at high speed, such as a car.

Furthermore, the notions of critical communications and non-critical communications apply to any communication system SYS having communications on at least two different priority levels. In a general sense, the critical communications correspond to communications having a high priority for the system. The non-critical communications correspond to communication having a lower priority for the system than the critical communications. For instance, the critical communications have a low rate and have important delay constraints, whereas the non-critical communications have a high rate with moderate to low delay constraints.

The method of handling a handover according to the invention has several advantages.

As described above, given the handover between the source base station SBS and the target base station TBS is carried out for the non-critical communications while the critical communications are maintained with the source base station SBS, there is no interruption of the critical communications should the handover fail. Therefore, in the context of a CBTC-based train, the risks of causing an emergency stop of the train due to a connectivity failure of the critical communications during a handover are reduced.

In addition, the implementation of an ICIC method for extending the range of the source base station SBS further reduces the risks of an interruption of the critical communications of the system SYS. Moreover, the method is highly adaptable to different situations as different options regarding the triggering or the carrying out of the steps itself may be selected.

In particular, the method may be driven either by the infrastructure WCN itself, either directly by the stations or by the core network CN, or by the system SYS onboard the moving vehicle TRA.

Many modifications and variations of the present invention are made possible in the light of the above teachings. The invention is defined by the appended claims.

## Claims

1. A method for handling a handover of a wireless communication system (SYS) located onboard a moving vehicle (TRA) between a source base station (SBS) and a target base station (TBS) of a wireless communication infrastructure (WCN), wherein:
- initially, the wireless communication system (SYS) and the source base station (SBS) are connected using at least one first common communication bearer (CB1) with which both critical communications and non-critical communications are exchanged between the wireless communication system (SYS) and the source base station (SBS),
- during a splitting step (S3), a dual connectivity configuration is enabled, in which the critical communications and the non-critical communications are split between at least one critical communication bearer (CCB) configured to bear the critical communications and at least one non-critical communication bearer (NCCB) configured to bear the non-critical communications, the critical and non-critical communication bearers (CCB, NCCB) being connected to the source base station (SBS),
- during a handover step (S5), a handover of the non-critical communication bearer (NCCB) between the source base station (SBS) and the target base station (TBS) is carried out,
- a release step (S6) performed after the handover step, in which the dual connectivity configuration is disabled, whereby the non-critical and critical communication bearers (NCCB, CCB) are regrouped into at least one second common bearer (CB2) through which the target base station (TBS) and the wireless communication system (SYS) exchange both the critical and non-critical communications.

2. The method of claim 1, wherein during the splitting step (S3), a cell range extension of the source base station (SBS) is performed using an inter-cell interference coordination between the source base station (SBS) and the target base station (TBS) so as to increase a cell range (CRS) of the source base station (SBS) for the critical communication bearer (CCB).

3. The method of claim 2, wherein during the handover step (S5), the target base station (TBS) uses time-frequency resources that are different from time-frequency resources used by the source base station (SBS) to maintain connectivity with the critical communication bearer (CCB).

4. The method of claim 2, wherein during the handover step (S5), the target base station (TBS) uses time-frequency resources with low power, said time-frequency resources including time-frequency resources used by the source base station to maintain connectivity with the critical communication bearer (CCB).

5. The method according to any of claims 2 to 4, wherein the source base station (SBS) determines at least an amount of time-frequency resources needed by said source base station (SBS) to maintain connectivity with the critical communication bearer (CCB) during the cell range extension of the source base station (SBS) and reports at least said amount to the target base station (TBS).

6. The method according to claim 5, wherein the amount of resources is determined as a function of the speed of the vehicle (TRA).

7. The method according to any of the preceding claims, wherein the splitting step (S3) is triggered after a handover attempt for handing over the wireless communication system (SYS) between the source base station (SBS) and the target base station (TBS) has failed and at least one request for a handover using the dual connectivity configuration has been sent to the source base station (SBS) and/or to a core network (CN) of the wireless communication infrastructure (WCN).

8. The method according to claim 7, wherein the at least one request is sent by the communication system to the source base station (SBS).

9. The method according to claim 7, wherein the at least one request comprises a request for a handover using the dual connectivity configuration sent by the target base station (TBS) to the source base station (SBS) and a request for triggering the splitting step (S3) sent by the target base station (TBS) to the core network (CN).

10. The method according to claim 7, wherein the at least one request is a request for triggering the splitting step sent by the target base station (TBS) to the source base station (SBS).

11. The method according to claim 10, wherein the request for triggering the splitting step is forwarded to the core network (CN) which carries out the splitting step (S3) in response to said request.

12. The method according to any of claims 1 to 5, wherein the source base station (SBS) and/or the target base station (TBS) or a core network (CN) of the wireless communication infrastructure (WCN) are configured to determine a handover success rate between the source base station (SBS) and the target base station (TBS), and wherein the splitting step (S3) and the handover step (S5) are triggered when conditions including a condition regarding the handover success rate being above a predetermined threshold are met.

13. A wireless communication infrastructure for use in a method according to any of the preceding claims, said wireless communication infrastructure (WCN) comprising:
- a source base station (SBS) adapted to communicate with a wireless communication system (SYS) located onboard a moving vehicle (TRA) using at least one first common communication bearer (CB1) with which both critical communications and non-critical communications are exchanged between the wireless communication system (WCN) and the source base station (SBS),
- a target base station (TBS),
the wireless communication infrastructure (WCN) comprising one or more components configured to:
- implement a dual connectivity configuration for the communications between the wireless communication infrastructure (WCN) and said wireless communication system (SYS), in which the critical communications and the non-critical communications are split between at least one critical communication bearer (CCB) configured to bear the critical communications and at least one non-critical communication bearer (NCCB) configured to bear the non-critical communications, said critical and non-critical communication bearers (CCB, NCCB) being connected to the source base station (SBS),
- carry out a handover of the non-critical communication bearer (NCCB) between the source base station (SBS) and the target base station (TBS), and
- disable the dual connectivity configuration and regroup the non-critical and critical communications bearers (NCCB, CCB) into at least one second common communication bearer (CB2) through which the target base station (TBS) and the wireless communication system exchange both the critical and non-critical communications.

14. A wireless communication system destined to be located on board a moving vehicle and adapted to communicate with a source base station (SBS) of a wireless communication infrastructure (WCN) using at least one first common communication bearer (CB1) with which both critical communications and non-critical communications are exchanged between the wireless communication system (SYS) and the source base station (SBS),
said wireless communication system comprising a control module (CM) configured to:
- trigger the implementation of a dual connectivity configuration for the communications between the wireless communication infrastructure (WCN) and said wireless communication system (SYS), in which the critical communications and the non-critical communications are split between at least one critical communication bearer (CCB) configured to bear the critical communications and at least one non-critical communication bearer (NCCB) configured to bear the non-critical communications, said critical and non-critical bearers being connected to the source base station (SBS),
- trigger a handover of the non-critical communication bearer (NCCB) between the source base station (SBS) and a target base station (TBS) of the wireless communication infrastructure , and
- trigger a disabling of the dual connectivity configuration for the regrouping of the non-critical and critical communication bearers (NCCB, CCB) into at least one second common communication bearer (CB2) through which the target base station (TBS) and the wireless communication system (SYS) exchange both the critical and non-critical communications.

15. A vehicle comprising a wireless communication system according to claim 14.

## Patentansprüche

1. Verfahren zur Handhabung eines Handover eines drahtlosen Kommunikationssystems (SYS), das sich an Bord eines sich bewegenden Fahrzeugs (TRA) befindet, zwischen einer Quellbasisstation (SBS) und einer Zielbasisstation (TBS) einer drahtlosen Kommunikationsinfrastruktur (WCN), wobei:
- anfangs das drahtlose Kommunikationssystem (SYS) und die Quellbasisstation (SBS) unter Verwendung von mindestens einem ersten gemeinsamen Kommunikationsträger (CB1) verbunden sind, mit dem sowohl kritische Kommunikationen als auch nicht-kritische Kommunikationen zwischen dem drahtlosen Kommunikationssystem (SYS) und der Quellbasisstation (SBS) ausgetauscht werden,
- während eines Aufteilungs-Schritts (S3) eine duale Anbindungskonfiguration aktiviert wird, bei welcher die kritischen Kommunikationen und die nicht-kritischen Kommunikationen zwischen mindestens einem kritischen Kommunikationsträger (CCB), der zum Tragen der kritischen Kommunikationen konfiguriert ist, und mindestens einem nicht-kritischen Kommunikationsträger (NCCB), der zum Tragen der nicht-kritischen Kommunikationen konfiguriert ist, aufgeteilt werden, wobei die kritischen und nicht-kritischen Kommunikationsträger (CCB, NCCB) mit der Quellbasisstation (SBS) verbunden sind,
- während eines Handover-Schritts (S5) ein Handover des nicht-kritischen Kommunikationsträgers (NCCB) zwischen der Quellbasisstation (SBS) und der Zielbasisstation (TBS) durchgeführt wird,
- nach dem Handover-Schritt ein Freigabe-Schritt (S6) ausgeführt wird, in dem die duale Anbindungskonfiguration deaktiviert wird, wodurch die nicht-kritischen und kritischen Kommunikationsträger (NCCB, CCB) in mindestens einen zweiten gemeinsamen Träger (CB2) umgruppiert werden, durch den die Zielbasisstation (TBS) und das drahtlose Kommunikationssystem (SYS) sowohl die kritischen als auch die nicht-kritischen Kommunikationen austauschen.

2. Verfahren nach Anspruch 1, wobei während des Aufteilungs-Schritts (S3) mittels einer interzellularen Interferenzkoordination zwischen der Quellbasisstation (SBS) und der Zielbasisstation (TBS) eine Zellbereichserweiterung der Quellbasisstation (SBS) ausgeführt wird, um dadurch einen Zellbereich (CRS) der Quellbasisstation (SBS) für den kritischen Kommunikationsträger (CCB) zu vergrößern.

3. Verfahren nach Anspruch 2, wobei während des Handover-Schritts (S5) die Zielbasisstation (TBS) Zeit-Frequenz-Ressourcen verwendet, die sich von den Zeit-Frequenz-Ressourcen unterscheiden, die von der Quellbasisstation (SBS) verwendet werden, um die Anbindung an den kritischen Kommunikationsträger (CCB) beizubehalten.

4. Verfahren nach Anspruch 2, wobei während des Handover-Schritts (S5) die Zielbasisstation (TBS) Zeit-Frequenz-Ressourcen mit geringer Leistung verwendet, wobei diese Zeit-Frequenz-Ressourcen die Zeit-Frequenz-Ressourcen einschließen, die von der Quellbasisstation verwendet werden, um die Anbindung an den kritischen Kommunikationsträger (CCB) beizubehalten.

5. Verfahren nach einem der Ansprüche 2 bis 4, wobei die Quellbasisstation (SBS) mindestens eine Menge an Zeit-Frequenz-Ressourcen ermittelt, die von der Quellbasisstation (SBS) benötigt werden, um während der Zellbereichserweiterung der Quellbasisstation (SBS) die Anbindung an den kritischen Kommunikationsträger (CCB) beizubehalten, und mindestens diese Menge an die Zielbasisstation (TBS) meldet.

6. Verfahren nach Anspruch 5, wobei die Menge an Ressourcen als eine Funktion der Geschwindigkeit des Fahrzeugs (TRA) ermittelt wird.

7. Verfahren nach einem der vorangegangenen Ansprüche, wobei der Aufteilungs-Schritt (S3) eingeleitet wird, nachdem ein Handover-Versuch zur Übergabe des drahtlosen Kommunikationssystems (SYS) zwischen der Quellbasisstation (SBS) und der Zielbasisstation (TBS) fehlgeschlagen ist und mindestens eine Anforderung nach einem Handover mittels der dualen Anbindungskonfiguration an die Quellbasisstation (SBS) und/oder an ein Kernnetz (CN) der drahtlosen Kommunikationsinfrastruktur (WCN) gesendet wurde.

8. Verfahren nach Anspruch 7, wobei die mindestens eine Anforderung von dem Kommunikationssystem an die Quellbasisstation (SBS) gesendet wird.

9. Verfahren nach Anspruch 7, wobei die mindestens eine Anforderung eine Anforderung nach einem Handover mittels der dualen Anbindungskonfiguration, die von der Zielbasisstation (TBS) an die Quellbasisstation (SBS) gesendet wird, und eine Anforderung nach Einleitung des Aufteilungs-Schritts (S3), die von der Zielbasisstation (TBS) an das Kernnetz (CN) gesendet wird, umfasst.

10. Verfahren nach Anspruch 7, wobei die mindestens eine Anforderung eine Anforderung nach Einleitung des Aufteilungs-Schritts ist, die von der Zielbasisstation (TBS) an die Quellbasisstation (SBS) gesendet wird.

11. Verfahren nach Anspruch 10, wobei die Anforderung nach Einleitung des Aufteilungs-Schritts an das Kernnetz (CN) weitergeleitet wird, welches als Antwort auf diese Anforderung den Aufteilungs-Schritt (S3) durchführt.

12. Verfahren nach einem der Ansprüche 1 bis 5, wobei die Quellbasisstation (SBS) und/oder die Zielbasisstation (TBS) oder ein Kernnetz (CN) der drahtlosen Kommunikationsinfrastruktur (WCN) dazu konfiguriert sind, eine Handover-Erfolgsquote zwischen der Quellbasisstation (SBS) und der Zielbasisstation (TBS) zu ermitteln, und wobei der Aufteilungs-Schritt (S3) und der Handover-Schritt (S5) eingeleitet werden, wenn Bedingungen, einschließlich einer Bedingung, dass die Handover-Erfolgsquote über einem vorgegebenen Schwellenwert liegt, erfüllt werden.

13. Drahtlose Kommunikationsinfrastruktur zur Verwendung in einem Verfahren nach einem der vorangegangenen Ansprüche, die drahtlose Kommunikationsinfrastruktur (WCN) umfassend:
- eine Quellbasisstation (SBS), die zum Kommunizieren mit einem drahtlosen Kommunikationssystem (SYS), das sich an Bord eines sich bewegenden Fahrzeugs (TRA) befindet, unter Verwendung von mindestens einem ersten gemeinsamen Kommunikationsträger (CB1), mit dem sowohl kritische Kommunikationen als auch nicht-kritische Kommunikationen zwischen dem drahtlosen Kommunikationssystem (WCN) und der Quellbasisstation (SBS) ausgetauscht werden, ausgelegt ist,
- eine Zielbasisstation (TBS),
wobei die drahtlose Kommunikationsinfrastruktur (WCN) eine oder mehrere Komponenten umfasst, die konfiguriert sind zum:
- Umsetzen einer dualen Anbindungskonfiguration für die Kommunikationen zwischen der drahtlosen Kommunikationsinfrastruktur (WCN) und dem drahtlosen Kommunikationssystem (SYS), bei welcher die kritischen Kommunikationen und die nicht-kritischen Kommunikationen zwischen mindestens einem kritischen Kommunikationsträger (CCB), der zum Tragen der kritischen Kommunikationen konfiguriert ist, und mindestens einem nicht-kritischen Kommunikationsträger (NCCB), der zum Tragen der nicht-kritischen Kommunikationen konfiguriert ist, aufgeteilt werden, wobei die kritischen und nicht-kritischen Kommunikationsträger (CCB, NCCB) mit der Quellbasisstation (SBS) verbunden sind,
- Durchführen eines Handover des nicht-kritischen Kommunikationsträgers (NCCB) zwischen der Quellbasisstation (SBS) und der Zielbasisstation (TBS), und
- Deaktivieren der dualen Anbindungskonfiguration und Umgruppieren der nicht-kritischen und kritischen Kommunikationsträger (NCCB, CCB) in mindestens einen zweiten gemeinsamen Kommunikationsträger (CB2), durch den die Zielbasisstation (TBS) und das drahtlose Kommunikationssystem sowohl die kritischen als auch die nicht-kritischen Kommunikationen austauschen.

14. Drahtloses Kommunikationssystem, das dazu bestimmt ist, sich an Bord eines sich bewegenden Fahrzeugs zu befinden, und dazu angepasst ist, mit einer Quellbasisstation (SBS) einer drahtlosen Kommunikationsinfrastruktur (WCN) unter Verwendung von mindestens einem ersten gemeinsamen Kommunikationsträger (CB1) zu kommunizieren, mit dem sowohl kritische Kommunikationen als auch nicht-kritische Kommunikationen zwischen dem drahtlosen Kommunikationssystem (SYS) und der Quellbasisstation (SBS) ausgetauscht werden,
wobei das drahtlose Kommunikationssystem ein Steuermodul (CM) umfasst, das konfiguriert ist zum:
- Einleiten der Umsetzung einer dualen Anbindungskonfiguration für die Kommunikationen zwischen der drahtlosen Kommunikationsinfrastruktur (WCN) und dem drahtlosen Kommunikationssystem (SYS), bei welcher die kritischen Kommunikationen und die nicht-kritischen Kommunikationen zwischen mindestens einem kritischen Kommunikationsträger (CCB), der zum Tragen der kritischen Kommunikationen konfiguriert ist, und mindestens einem nicht-kritischen Kommunikationsträger (NCCB), der zum Tragen der nicht-kritischen Kommunikationen konfiguriert ist, aufgeteilt werden, wobei die kritischen und nicht-kritischen Träger mit der Quellbasisstation (SBS) verbunden sind,
- Einleiten eines Handover des nicht-kritischen Kommunikationsträgers (NCCB) zwischen der Quellbasisstation (SBS) und einer Zielbasisstation (TBS) der drahtlosen Kommunikationsinfrastruktur, und
- Einleiten einer Deaktivierung der dualen Anbindungskonfiguration zum Umgruppieren der nicht-kritischen und kritischen Kommunikationsträger (NCCB, CCB) in mindestens einen zweiten gemeinsamen Kommunikationsträger (CB2), durch den die Zielbasisstation (TBS) und das drahtlose Kommunikationssystem (SYS) sowohl die kritischen als auch die nicht-kritischen Kommunikationen austauschen.

15. Fahrzeug, umfassend ein drahtloses Kommunikationssystem nach Anspruch 14.

## Revendications

1. Procédé pour gérer un transfert d'un système de communications sans fil (SYS), situé à bord d'un véhicule en mouvement (TRA), entre une station de base source (SBS) et une station de base cible (TBS) d'une infrastructure de communications sans fil (WCN), dans lequel :
- initialement, le système de communications sans fil (SYS) et la station de base source (SBS) sont connectés en utilisant au moins une première porteuse commune de communications (CB1) avec laquelle à la fois des communications essentielles et des communications non essentielles sont échangées entre le système de communications sans fil (SYS) et la station de base source (SBS),
- durant une étape de division (S3), une configuration de connectivité double est activée, dans laquelle les communications essentielles et les communications non essentielles sont divisées entre au moins une porteuse de communications essentielles (CCB), configurée pour porter les communications essentielles, et au moins une porteuse de communications non essentielles (NCCB), configurée pour porter les communications non essentielles, les porteuses de communications essentielles et non essentielles (CCB, NCCB) étant connectées à la station de base source (SBS),
- durant une étape de transfert (S5), un transfert de la porteuse de communications non essentielles (NCCB) entre la station de base source (SBS) et la station de base cible (TBS) est exécuté,
- une étape de libération (S6) exécutée après l'étape de transfert, dans laquelle la configuration de connectivité double est désactivée, moyennant quoi les porteuses de communications essentielles et non essentielles (NCCB, CCB) sont regroupées en au moins une seconde porteuse commune (CB2) par l'intermédiaire de laquelle la station de base cible (TBS) et le système de communications sans fil (SYS) échangent à la fois les communications essentielles et non essentielles.

2. Procédé selon la revendication 1, dans lequel, durant l'étape de division (S3), une extension de portée cellulaire de la station de base source (SBS) est exécutée en utilisant une coordination d'interférence intercellulaire entre la station de base source (SBS) et la station de base cible (TBS) afin d'augmenter une portée cellulaire (CRS) de la station de base source (SBS) pour la porteuse de communications essentielles (CCB).

3. Procédé selon la revendication 2, dans lequel, durant l'étape de transfert (S5), la station de base cible (TBS) utilise des ressources temps-fréquence qui sont différentes de ressources temps-fréquence utilisées par la station de base source (SBS) pour maintenir la connectivité avec la porteuse de communications essentielles (CCB).

4. Procédé selon la revendication 2, dans lequel, durant l'étape de transfert (S5), la station de base cible (TBS) utilise des ressources temps-fréquence avec basse puissance, lesdites ressources temps-fréquence incluant des ressources temps-fréquence utilisées par la station de base source pour maintenir la connectivité avec la porteuse de communications essentielles (CCB).

5. Procédé selon l'une quelconque des revendications 2 à 4, dans lequel la station de base source (SBS) détermine au moins une quantité de ressources temps-fréquence requise par ladite station de base source (SBS) pour maintenir la connectivité avec la porteuse de communications essentielles (CCB) durant l'extension de portée cellulaire de la station de base source (SBS) et rapporte au moins ladite quantité à la station de base cible (TBS).

6. Procédé selon la revendication 5, dans lequel la quantité de ressources est déterminée en fonction de la vitesse du véhicule (TRA).

7. Procédé selon l'une quelconque des revendications précédentes, dans lequel l'étape de division (S3) est déclenchée après qu'une tentative de transfert pour transférer le système de communications sans fil (SYS) entre la station de base source (SBS) et la station de base cible (TBS) a échoué et au moins une demande d'un transfert en utilisant la configuration de connectivité double a été envoyée à la station de base source (SBS) et/ou à un réseau fédérateur (CN) de l'infrastructure de communications sans fil (WCN).

8. Procédé selon la revendication 7, dans lequel l'au moins une demande est envoyée par le système de communications à la station de base source (SBS).

9. Procédé selon la revendication 7, dans lequel l'au moins une demande comprend une demande d'un transfert en utilisant la configuration de connectivité double envoyée par la station de base cible (TBS) à la station de base source (SBS) et une demande de déclenchement de l'étape de division (S3) envoyée par la station de base cible (TBS) au réseau fédérateur (CN).

10. Procédé selon la revendication 7, dans lequel l'au moins une demande est une demande de déclenchement de l'étape de division envoyée par la station de base cible (TBS) à la station de base source (SBS).

11. Procédé selon la revendication 10, dans lequel la demande de déclenchement de l'étape de division est réacheminée au réseau fédérateur (CN) qui exécute l'étape de division (S3) en réponse à ladite demande.

12. Procédé selon l'une quelconque des revendications 1 à 5, dans lequel la station de base source (SBS) et/ou la station de base cible (TBS) ou un réseau fédérateur (CN) de l'infrastructure de communications sans fil (WCN) sont configurés pour déterminer un taux de succès de transfert entre la station de base source (SBS) et la station de base cible (TBS), et dans lequel l'étape de division (S3) et l'étape de transfert (S5) sont déclenchées lorsque des conditions, y compris une condition concernant le fait que le taux de succès de transfert est supérieur à un seuil prédéterminé, sont respectées.

13. Infrastructure de communications sans fil pour une utilisation dans un procédé selon l'une quelconque des revendications précédentes, ladite infrastructure de communications sans fil (WCN) comprenant :
- une station de base source (SBS) adaptée pour communiquer avec un système de communications sans fil (SYS) situé à bord d'un véhicule en mouvement (TRA) en utilisant au moins une première porteuse commune de communications (CB1) avec laquelle à la fois des communications essentielles et des communications non essentielles sont échangées entre le système de communications sans fil (WCN) et la station de base source (SBS),
- une station de base cible (TBS),
l'infrastructure de communications sans fil (WCN) comprenant un ou plusieurs composants configurés pour :
- mettre en oeuvre une configuration de connectivité double pour les communications entre l'infrastructure de communications sans fil (WCN) et ledit système de communications sans fil (SYS), dans laquelle les communications essentielles et les communications non essentielles sont divisées entre au moins une porteuse de communications essentielles (CCB), configurée pour porter les communications essentielles, et au moins une porteuse de communications non essentielles (NCCB), configurée pour porter les communications non essentielles, lesdites porteuses de communications essentielles et non essentielles (CCB, NCCB) étant connectées à la station de base source (SBS),
- exécuter un transfert de la porteuse de communications non essentielles (NCCB) entre la station de base source (SBS) et la station de base cible (TBS), et
- désactiver la configuration de connectivité double et regrouper les porteuses de communications essentielles et non essentielles (NCCB, CCB) en au moins une seconde porteuse commune de communications (CB2) par l'intermédiaire de laquelle la station de base cible (TBS) et le système de communications sans fil échangent à la fois les communications essentielles et non essentielles.

14. Système de communications sans fil destiné à être situé à bord d'un véhicule en mouvement et adapté pour communiquer avec une station de base source (SBS) d'une infrastructure de communications sans fil (WCN) en utilisant au moins une première porteuse commune de communications (CB1) avec laquelle à la fois des communications essentielles et des communications non essentielles sont échangées entre le système de communications sans fil (SYS) et la station de base source (SBS), ledit système de communications sans fil comprenant un module de commande (CM) configuré pour :
- déclencher la mise en oeuvre d'une configuration de connectivité double pour les communications entre l'infrastructure de communications sans fil (WCN) et ledit système de communications sans fil (SYS), dans laquelle les communications essentielles et les communications non essentielles sont divisées entre au moins une porteuse de communications essentielles (CCB), configurée pour porter les communications essentielles, et au moins une porteuse de communications non essentielles (NCCB), configurée pour porter les communications non essentielles, lesdites porteuses de communications essentielles et non essentielles étant connectées à la station de base source (SBS),
- déclencher un transfert de la porteuse de communications non essentielles (NCCB) entre la station de base source (SBS) et une station de base cible (TBS) de l'infrastructure de communications sans fil, et
- déclencher une désactivation de la configuration de connectivité double pour le regroupement des porteuses de communications essentielles et non essentielles (NCCB, CCB) en au moins une seconde porteuse commune de communications (CB2) par l'intermédiaire de laquelle la station de base cible (TBS) et le système de communications sans fil (SYS) échangent à la fois les communications essentielles et non essentielles.

15. Véhicule comprenant un système de communications sans fil selon la revendication 14.
